# FASCICULE DE BREVET EUROPEEN

(11) **EP 1 932 717 B1**
(45) Date de publication et mention de la délivrance du brevet: **10.08.2011**
(21) Numéro de dépôt: 07122596.5
(22) Date de dépôt: 07.12.2007
(51) Int. Cl.: B60P 1/64

(54) **Dispositif de verrouillage hydraulique pour bras de levage**
Hydraulische Verschlussvorrichtung für einen Hubarm
Hydraulic locking device for a lifting arm

(30) Priorité: 14.12.2006 FR 0610901
(43) Date de publication de la demande: 18.06.2008
(73) Titulaire: Guima Palfinger, 82300 Caussade (FR)
(72) Inventeur: Lagorce, Mathieu, 82300 Monteils (FR)
(74) Mandataire: Texier, Christian

(56) Documents cités:
- EP-A1- 0 025 322
- EP-A1- 0 358 541
- WO-A-01/15932
- AU-B2- 488 775
- BE-A6- 1 013 349
- DE-A1- 3 738 884
- DE-U1- 29 604 355

## Description

L'invention concerne un dispositif de sécurité hydraulique pour un bras de levage monté sur un châssis porteur routier et destiné à charger, décharger et benner des caissons, ce bras comportant un basculeur monté à pivotement sur le châssis autour d'un arbre transversal et une bielle montée à pivotement sur le basculeur autour d'un arbre transversal (dit ci-après arbre principal) fixé au basculeur, cf. DE 29604355 U.

Ce dispositif est conçu pour solidariser à la demande pendant la phase de bennage la bielle et le basculeur et désolidariser simultanément le basculeur et le châssis, et solidariser à la demande pour la manoeuvre de chargement le basculeur et le châssis et désolidariser simultanément la bielle et le basculeur.

Selon l'invention, le dispositif comprend :
- une première butée de verrouillage fixe sur le châssis pour coopérer avec l'arbre principal en sorte que la rotation de cet arbre et donc le pivotement du basculeur soit bloquée ou non par la butée en dépendance de la position angulaire de l'arbre ;
- une deuxième butée de verrouillage fixe sur le basculeur pour coopérer avec un crochet pivotant sur un axe transversal de la bielle en sorte que le pivotement de la bielle soit bloqué ou non en dépendance de la position angulaire du crochet ;
- un vérin à double effet actionnant par sa tige une structure apte à provoquer une rotation de l'arbre principal sur lui-même dans un sens ou en sens opposé selon que la tige du vérin est sortie ou rentrée en sorte que l'arbre soit bloqué ou non par la première butée, et actionnant par son cylindre ledit crochet, et une biellette articulée à une extrémité à ladite structure et articulée à son extrémité opposée audit crochet pour que l'action du vérin sur la structure provoque par l'intermédiaire de la biellette une action simultanée sur le crochet, en sorte que le vérin commande selon le sens de déplacement de sa tige le déblocage du basculeur par rapport au châssis et le blocage simultané de la bielle sur le basculeur, ou le blocage du basculeur sur le châssis et le déblocage simultané de la bielle par rapport au basculeur.

On décrira ci-après un exemple de réalisation non limitatif du dispositif de l'invention, en référence aux figures du dessin joint sur lequel :
- la figure 1 est une vue latérale schématique d'un châssis porteur routier équipé du bras de levage, en configuration de chargement ;
- la figure 2 est une vue latérale schématique du châssis équipé de la figure 1, en configuration de bennage ;
- la figure 3 est une vue de dessus en perspective du châssis et du bras équipé du dispositif de l'invention ;
- la figure 4 est une vue agrandie de la partie arrière du châssis et du bras équipé de la figure 3 ;
- la figure 5 est une vue de dessus en perspective du dispositif ;
- la figure 6 est une vue de côté du dispositif en configuration de chargement/déchargement ;
- la figure 7 est une vue de côté du dispositif en configuration de bennage, et
- les figures 8 à 11 sont différentes vues du dispositif, et
- la figure 12 est une perspective du vérin et d'une chape fixée à la tige du vérin et qui fait partie de la structure actionnée par la tige du vérin.

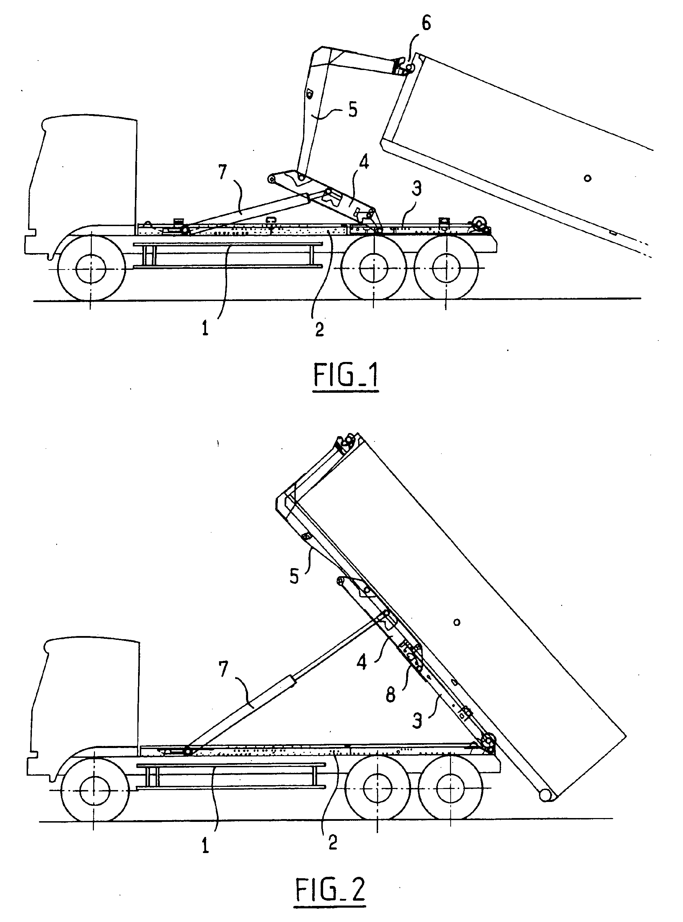

Les figures 1 et 2 représentent un porteur routier (1) dont le châssis (2) (ou faux-châssis) est équipé d'un bras de levage constitué d'un basculeur (3) qui pivote sur le châssis, d'une bielle (4) qui pivote sur le basculeur et d'une équerre (5) qui pivote sur la bielle et qui est terminée par un crochet (6). Un vérin (7) commande le pivotement du bras en prenant appui sur le basculeur.

Il est inutile de décrire plus en détails cette structure qui est bien connue et sur laquelle ne porte pas l'invention.

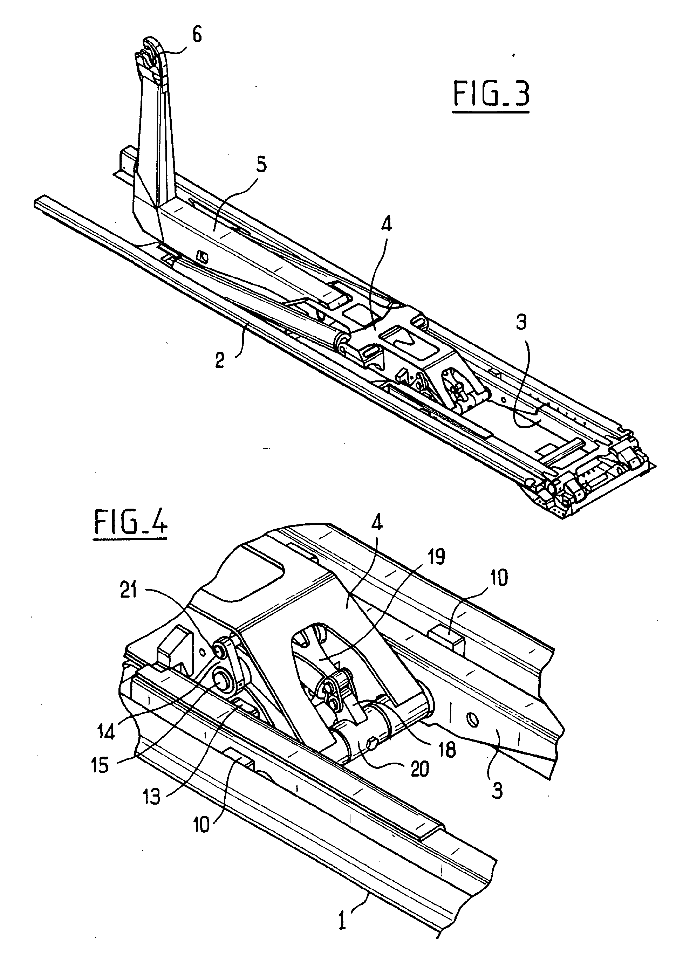

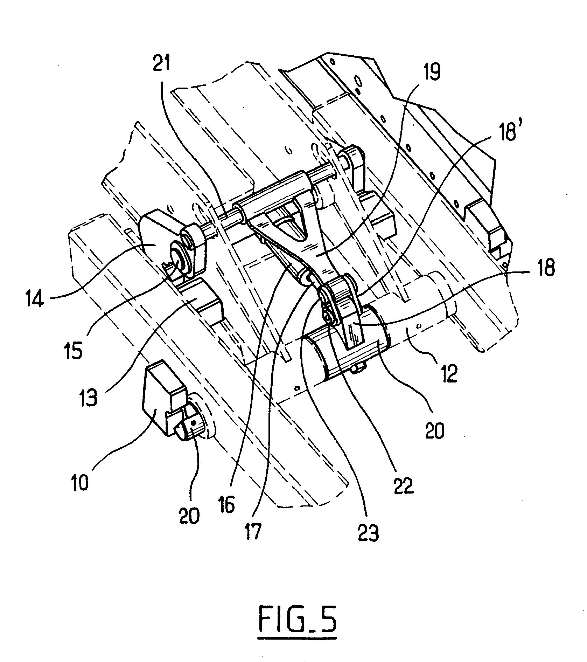

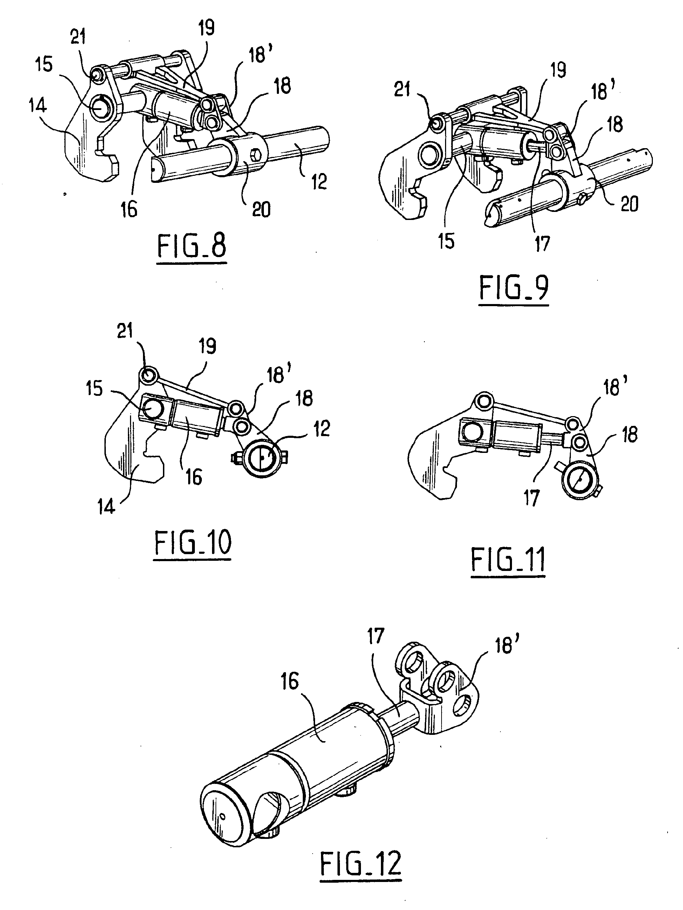

Le dispositif de l'invention (figures 3 à 12) est situé vers l'arrière du basculeur à un emplacement désigné en (8) sur la figure 2.

Ce dispositif comprend :
- une première butée de verrouillage (10) fixe sur le châssis pour coopérer avec un aménagement (11) de l'arbre (12) de pivotement de la bielle sur le basculeur en sorte que la rotation de cet arbre soit bloquée ou non par la butée en dépendance de la position angulaire de l'arbre ;
- une deuxième butée de verrouillage (13) fixe sur le basculeur (3) pour coopérer avec un crochet (14) pivotant sur un axe transversal (15) en sorte que le basculement de la bielle (15) soit bloqué ou non en dépendance de la position angulaire du crochet ;
- un vérin à double effet actionnant par sa tige (17) une structure (18, 18') dont une partie (18) est fixée à l'arbre principal pour commander à la demande une rotation de cet arbre sur lui-même dans un sens ou en sens opposé selon que la tige du vérin est sortie ou rentrée en sorte que l'arbre soit bloqué ou non par la première butée, et actionnant par son cylindre (16) ledit crochet, et une biellette (19) articulée à une extrémité sur une partie (18') de la structure et articulée à son extrémité opposée audit crochet (14) pour que l'action de la tige du vérin sur le levier provoque par l'intermédiaire de la biellette une action simultanée sur le crochet, en sorte que le vérin commande selon le sens de déplacement de sa tige le déblocage du basculeur par rapport au châssis et le blocage simultané de la bielle sur le basculeur, ou le blocage du basculeur sur le châssis et le déblocage simultané de la bielle par rapport au basculeur.

Dans l'exemple représenté :
- l'aménagement de l'arbre principal est un méplat (20) formé à une extrémité de l'arbre pour venir en prise avec la butée ;
- le crochet bascule autour d'un axe transversal (15) solidaire du cylindre du vérin ;
- la biellette (19) est articulée au crochet (14) par un axe transversal (21) situé au dessus de l'axe de basculement (15) du crochet ;
- la structure comporte une chape (18') fixée à la tige du vérin et un levier (18) fixé à l'arbre principal (12) et articulé à la chape par un axe transversal (22) ;
- la structure est articulée à la biellette par un axe transversal (23) situé au dessus de l'axe d'articulation (22) du levier à la chape ;
- le levier (18) comporte un manchon (20) fixé sur l'arbre principal (12) ;
- les butées (10, 13), le crochet (14) sont doubles, situés respectivement à droite et à gauche du châssis et de la bielle ;
- le vérin (16, 17) est unique et axé dans le plan médian longitudinal du bras et le levier (18) est unique.

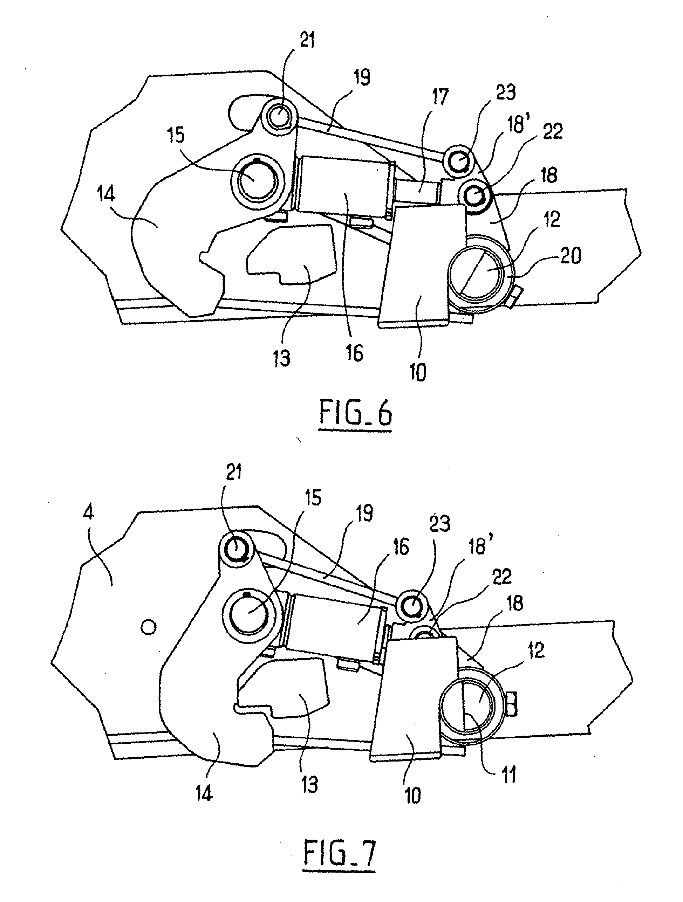

En phase de bennage du caisson (figure 7), l'action de rentrée du vérin hydraulique permet la rotation du levier et donc de l'axe principal et par l'intermédiaire de la biellette, la rotation des crochets de verrouillage, ce qui permet de désolidariser le basculeur et le faux-châssis, et aussi de solidariser la bielle et le basculeur.

En phase de chargement et déchargement du caisson (figure 6), l'action de sortie du vérin hydraulique permet la rotation du levier et donc de l'axe principal et par l'intermédiaire de la biellette, la rotation des crochets de verrouillage, ce qui permet de solidariser le basculeur et le faux-châssis, et aussi de désolidariser la bielle et le basculeur.

L'action du vérin hydraulique peut être indépendante ou simultanée avec le verrouillage hydraulique arrière du caisson, s'il est présent.

Des capteurs de positions détectent les positions extrêmes du système et autorise en fonction les manoeuvres du bras de levage.

L'invention n'est pas limitée aux réalisations qui ont été décrites. En particulier les positions du cylindre et de la tige du vérin pourraient être inversées.

## Revendications

1. Dispositif de verrouillage hydraulique pour un bras de levage (3, 4, 8) monté sur un châssis porteur routier (2) et destiné à charger, décharger et benner des caissons, ce bras comportant un basculeur (3) monté à pivotement sur le châssis autour d'un arbre transversal et une bielle (4) montée à pivotement sur le basculeur, autour d'un arbre transversal (12) (dit ci-après arbre principal) fixé au basculeur, ce dispositif comprenant :
• une première butée de verrouillage (10) fixe sur le châssis pour coopérer avec l'arbre principal (12) en sorte que la rotation de cet arbre et donc le pivotement du basculeur sur le châssis soit bloquée ou non par la butée en dépendance de la position angulaire de l'arbre ;
• une deuxième butée de verrouillage (13) fixe sur le basculeur pour coopérer avec un crochet (14) pivotant sur un axe transversal (15) de la bielle en sorte que le basculement de la bielle autour de l'arbre principal soit bloqué ou non en dépendance de la position angulaire du crochet ;
• un vérin à double effet (16, 17) actionnant par sa tige (17) une structure (18, 18') apte à commander une rotation de l'arbre principal (12) sur lui-même dans un sens ou en sens opposé selon que la tige du vérin est sortie ou rentrée en sorte que l'arbre soit bloqué ou non par la première butée, et actionnant par son cylindre ledit crochet, et une biellette articulée à une extrémité à ladite structure et articulée à son extrémité opposée audit crochet pour que l'action de la tige du vérin sur la structure provoque par l'intermédiaire de la biellette une action simultanée sur le crochet, en sorte que le vérin commande selon le sens de déplacement de sa tige le déblocage du basculeur par rapport au châssis et le blocage simultané de la bielle sur le basculeur, ou le blocage du basculeur sur le châssis et le déblocage simultané de la bielle par rapport au basculeur.

2. Dispositif selon la revendication 1 dans lequel l'arbre principal (12) comporte un méplat (11) formé à une ou à chaque extrémité de l'arbre pour coopérer avec la ou les butées (10).

3. Dispositif selon la revendication 1 ou 2 dans lequel ledit crochet (14) bascule autour d'un axe transversal (15) solidaire du cylindre (16) du vérin.

4. Dispositif selon la revendication 3 dans lequel la biellette (19) est articulée au crochet (14) par un axe transversal (21) situé au dessus dudit axe de basculement (15).

5. Dispositif selon l'une des revendications 1 à 4 dans lequel la structure comporte une chape (18') fixée à la tige du vérin et un levier (18) fixé à l'arbre principal (12) et articulé à la chape par un axe transversal (22).

6. Dispositif selon la revendication 5 dans lequel le levier comporte un manchon (20) fixé sur l'arbre principal (12).

7. Dispositif selon la revendication 5 ou 6 dans lequel la structure est articulée à la biellette par un axe transversal (23) situé au dessus de l'axe d'articulation (22) du levier à la chape.

8. Dispositif selon l'une des revendications 1 à 7 dans lequel les butées (10, 13), le crochet (14) sont doubles situés respectivement à droite et à gauche du châssis et le bielle.

9. Dispositif selon l'une des revendications 1 à 8 dans lequel le vérin est unique et axé dans le plan médian longitudinal du bras et le levier (18) est unique.

10. Dispositif selon l'une des revendications 1 à 9 dont le bras comporte une équerre (5) qui pivote la bielle (4) et se termine par un crochet (6).

11. Un châssis porteur routier qui comporte un bras de levage équipé d'un dispositif selon l'une des revendications 1 à 10.

## Claims

1. Hydraulic locking device for a lifting arm (3, 4, 8) mounted on a road-going carrying chassis (2) and intended to load, unload and dump caissons, said arm comprising a tipper (3) pivotally mounted on the chassis around a cross shaft and a connecting rod (4) pivotally mounted on the tipper, around a cross shaft (12) (hereafter designated main shaft) fixed to the tipper, said device comprising:
• a first locking abutment (10) fixed on the chassis to cooperate with the main shaft (12) such that the rotation of said shaft and thus the pivoting of the tipper on the chassis is blocked or not by the abutment depending on the angular position of the shaft;
• a second locking abutment (13) fixed on the tipper to cooperate with a catch (14) pivoting on a cross shaft (15) of the connecting rod such that the tilting of the connecting rod around the main shaft is blocked or not depending on the angular position of the catch;
• a double acting jack (16, 17) actuating by its rod (17) a structure (18, 18') able to control a rotation of the main shaft (12) on itself in one direction or in an opposite direction depending on whether the rod of the jack is out or in such that the shaft is blocked or not by the first abutment, and actuating by its cylinder said catch, and a slave connecting rod jointed at one end to said structure and jointed at its opposite end to said catch so that the action of the rod of the jack on the structure causes through the intermediary of the slave connecting rod a simultaneous action on the catch, such that the jack controls, depending on the direction of movement of its rod, the unblocking of the tipper in relation to the chassis and the simultaneous blocking of the connecting rod on the tipper, or the blocking of the tipper on the chassis and the simultaneous unblocking of the connecting rod in relation to the tipper.

2. Device according to claim 1 wherein the main shaft (12) comprises a flat (11) formed at one or at each end of the shaft to cooperate with the abutment(s) (10).

3. Device according to claim 1 or 2 wherein said catch (14) tilts around a cross shaft (15) integral with the cylinder (16) of the jack.

4. Device according to claim 3 wherein the slave connecting rod (19) is jointed to the catch (14) by a cross shaft (21) located above said tilting axle (15).

5. Device according to one of claims 1 to 4 wherein the structure comprises a clevis fitting (18') fixed to the rod of the jack and a lever (18) fixed to the main shaft (12) and jointed to the clevis fitting by a cross shaft (22).

6. Device according to claim 5 wherein the lever comprises a sleeve (20) fixed on the main shaft (12).

7. Device according to claim 5 or 6 wherein the structure is jointed to the slave connecting rod by a cross shaft (23) located above the hinge shaft (22) of the lever to the clevis fitting.

8. Device according to one of claims 1 to 7 wherein the abutments (10, 13), the catch (14) are double, located respectively on the right and the left of the chassis and the connecting rod.

9. Device according to one of claims 1 to 8 wherein the jack is single and centred on the longitudinal median plane of the arm and the lever (18) is single.

10. Device according to one of claims 1 to 9 in which the arm comprises an angle bracket (5) which pivots the connecting rod (4) and ends by a catch (6).

11. A road-going carrying chassis which comprises a lifting arm equipped with a device according to one of claims 1 to 10.

## Patentansprüche

1. Hydraulische Verriegelungsvorrichtung für einen Hubarm (3, 4, 8), der an einem Lastkraftwagenträgergestell (2) befestigt ist und vorgesehen ist, Kästen zu laden, zu entladen und zu kippen, wobei der Hubarm ein Kippglied (3), das um eine Querwelle schwenkbar an dem Gestell befestigt ist, und ein Koppelglied (4), das um eine Querwelle (12) (nachfolgend Hauptwelle genannt), die an dem Kippglied fixiert ist, schwenkbar an dem Kippglied befestigt ist, wobei die Vorrichtung aufweist:
- einen ersten Verriegelungsanschlag (10), der an dem Gestell fixiert ist, um mit der Hauptwelle (12) derart zusammenzuwirken, dass die Drehung der Welle und folglich die Verschwenkung des Kippglieds an dem Gestell durch den Anschlag in Abhängigkeit von der Winkelposition der Welle blockiert wird oder nicht; und
- einen zweiten Verriegelungsanschlag (13), der an dem Kippglied fixiert ist, um mit einem Hakenelement (14), das drehbar an einer Querachse (15) des Koppelglieds gelagert ist, derart zusammenzuwirken, dass das Kippen des Kippglieds um die Hauptwelle in Abhängigkeit der Winkelposition des Hakenelements blockiert wird oder nicht;
- ein doppeltwirkender Stellzylinder (16, 17), der durch dessen Schaft (17) einen Aufbau (18, 18') betätigt, der angepasst ist, eine Drehung der Hauptwelle (12) in eine Richtung oder in eine entgegengesetzte Richtung entsprechend einem Ausfahren oder Einfahren des Schafts des Stellzylinders derart zu steuern, dass die Welle durch den ersten Anschlag blockiert wird oder nicht, und der durch dessen Zylinder das Hakenelement und ein Gestänge, das an einem Ende an dem Aufbau gelenkig gelagert ist und an dem gegenüberliegenden Ende an dem Hakenelement gelenkig gelagert ist, betätigt, damit die Betätigung des Schafts des Stellzylinders auf den Aufbau über das Gestänge eine simultane Betätigung auf das Hakenelement herbeiführt, so dass der Stellzylinder entsprechend der Verlagerungsrichtung des Schafts die Entriegelung des Kippglieds in Bezug auf das Gestell und die simultane Verriegelung des Koppelglieds an dem Kippglied oder die Verriegelung des Kippglieds an dem Gestell und die simultane Entriegelung des Koppelglieds in Bezug auf das Kippglied steuert.

2. Vorrichtung gemäß Anspruch 1, wobei die Hauptwelle (12) einen Abflachung (11) aufweist, die an einem oder an jedem Ende der Welle zur Zusammenwirkung mit dem oder den Anschlägen (10) ausgebildet ist.

3. Vorrichtung gemäß Anspruch 1 oder 2, wobei das Hakenelement (14) um eine Querwelle (15) zusammen mit dem Zylinder (16) des Stellzylinders kippt.

4. Vorrichtung gemäß Anspruch 3, wobei das Gestänge (19) an dem Hakenelement (14) durch eine Querachse (21), die oberhalb der Kippachse (15) angeordnet ist, gelenkig gelagert ist.

5. Vorrichtung gemäß einem der Ansprüche 1 bis 4, wobei der Aufbau ein Gabelstück (18'), das an dem Schaft des Stellzylinders fixiert ist, und einen Hebel (18), der an der Hauptwelle (12) fixiert und an dem Gabelstück über eine Querachse (22) gelenkig gelagert ist, aufweist.

6. Vorrichtung gemäß Anspruch 5, wobei der Hebel eine Muffe (20) aufweist, die an der Hauptwelle (12) fixiert ist.

7. Vorrichtung gemäß Anspruch 5 oder 6, wobei der Aufbau an dem Gestänge über eine Querachse (23), die oberhalb der Gelenkachse (22) des Hebels an dem Gabelstück angeordnet ist, gelenkig gelagert ist.

8. Vorrichtung gemäß einem der Ansprüche 1 bis 7, wobei die Anschläge (10, 13) und das Hakenelement (14) doppelt, jeweils links und rechts vom dem Gestell und dem Koppelglied, angeordnet sind.

9. Vorrichtung gemäß einem der Ansprüche 1 bis 8, wobei der Stellzylinder einmal vorgesehen ist und entsprechend der Mittellängsebene des Hubarms ausgerichtet ist und der Hebel (18) einmal vorgesehen ist.

10. Vorrichtung gemäß einem der Ansprüche 1 bis 9, wobei der Hubarm ein Winkelelement (5) aufweist, das an dem Koppelglied (4) schwenkt und mit einem Hakenelement (6) endet.

11. Lastkraftwagenträgergestell, das einen Hubarm aufweist, der mit einer Vorrichtung gemäß einem der Ansprüche 1 bis 10 ausgestattet ist.
